# EUROPEAN PATENT APPLICATION

(11) **EP 3 543 203 A1**
(43) Date of publication of application: **25.09.2019**
(21) Application number: 19000135.4
(22) Date of filing: 19.03.2019
(51) Int. Cl.: B66F 11/04, B25H 3/00, B25H 5/00

(54) **CONNECTION ASSEMBLY**

(30) Priority: 19.03.2018 AU 2018900900; 08.11.2018 AU 2018904264
(71) Applicant: Jabella Pty Ltd., Banyo, QLD 4014 (AU)
(72) Inventor: SCOTT, Corey, Banyo QLD 4014 (AU); BROWN, James, Banyo QLD 4014 (AU); STUART, Gordon H., Mt Gravatt QLD 4122 (AU)
(74) Representative: Lichti - Patentanwälte Partnerschaft mbB

(57) **Abstract**

A connection assembly for use in an elevated work platform, the connection assembly comprising a connection member, the connection member including a connection portion adapted for connection to one or more attachment portions located on a surface of the elevated work platform, and a retention portion, the retention portion being adapted for removable connection to a retention member, the retention member further comprising an object retention portion adapted to retain one or more objects.

## Description

### TECHNICAL FIELD:

The present invention relates to a connection assembly. In particular, the present invention relates to a connection assembly for use on elevated work platforms and the like. The present invention also relates to elevated work platforms adapted to form part of the connection assembly.

### BACKGROUND ART:

There are many instances in which a worker may be required to work at heights, and in locations, that are inaccessible using ladders and the like. These situations may include maintenance and construction work, or by firefighters and the like for emergency access.

In these situations, an aerial platform (such as an elevated work platform (EWP), cherry picker, scissor lift or the like) may be used to lift a worker to the height and location where the work is to be conducted. These aerial platforms typically comprise a platform on which a worker positions themselves that is propelled to the desired location by a drive mechanism powered by, for example, hydraulics or pneumatics.

Typically, a worker will need to have all of the tools they will require for a job with them when working on an aerial platform, as it would be both impractical and time-consuming to raise and lower aerial platforms every time a new tool is required. However, it is also undesirable for tools to be carried loose on the floor of the aerial platform or in a toolbox that is placed on the platform floor.

Some attempts to overcome these issues have been developed. For instance, tool belts or tool holsters that attach to a worker's clothing (such as a belt) or are tied around a worker's waist have been used in the past. However, the drawback with these devices is that a worker must carry the additional weight of the belt and the tools with them as they move around. In addition, each worker on an aerial platform is required to take and wear their own tool belt, meaning that more equipment than necessary may be loaded onto the aerial platform. Tool carrying devices can also be slung over the edge of the bucket, but this does not provide a secure fit or attachment to the bucket, and there is no bracket that can be used on all different bucket types. The storage containers developed with any existing brackets are typically either tool specific, or universal and as such are either limiting in their scope, or not shaped well for securely storing tools or adapting for a variety of different tools that may be used by the types of workers in an aerial platform

Thus, there would be an advantage if it were possible to provide a connection assembly that allowed to the safe storage of tools and the like on an aerial platform without unnecessarily encumbering a worker, or requiring a different holder for different models or brands of tools. In addition, there would be an advantage if it were possible to provide an elevated work platform adapted to form part of, or be used in conjunction with, the connection assembly.

It will be clearly understood that, if a prior art publication is referred to herein, this reference does not constitute an admission that the publication forms part of the common general knowledge in the art in Australia or in any other country.

### SUMMARY OF INVENTION:

The present invention is directed to a connection assembly for use in an elevated work platform, which may at least partially overcome at least one of the abovementioned disadvantages or provide the consumer with a useful or commercial choice.

With the foregoing in view, the present invention, in a first aspect, resides broadly in a connection assembly for use in an elevated work platform, the connection assembly comprising a connection member, the connection member including a connection portion adapted for connection to one or more attachment portions located on a surface of the elevated work platform, and a retention portion, the retention portion being adapted for removable connection to a retention member, the retention member further comprising an object retention portion adapted to retain one or more objects.

The connection member may be of any suitable size, shape or configuration. As previously stated the connection member includes a connection portion adapted for connection to one or more attachment portions located on the elevated work platform and a retention portion adapted for removable connection to a retention member. In some embodiments, the connection portion and the retention portion may be formed separately to one another and adapted for fixed or temporary connection to one another. In an alternative embodiment of the invention, the connection member may comprise a unitary structure. In this embodiment, the connection portion and the retention portion may be formed integrally as the connection member.

The connection portion and the retention portion may be positioned relative to one another in any suitable manner. In some embodiments of the invention, the connection portion and the retention portion may be connected to one another. In another embodiment of the invention, the connection member may further comprise an intermediate portion, and the connection portion and the retention portion may extend outwardly from the intermediate portion. The connection portion and the retention portion may extend outwardly from the intermediate portion, and each other, in any suitable direction.

The intermediate portion may be of any suitable size, shape or configuration. In some embodiments of the invention, the intermediate portion may comprise two or more faces. In this embodiment, it is envisaged that the connection portion may extend from a first face of the intermediate portion, while the retention portion may extend from a second face of the intermediate portion. In a particular embodiment of the invention, the first face of the intermediate portion and the second face of the intermediate portion may comprise opposed faces of the intermediate portion. Thus, in this embodiment of the invention, it is envisaged that the connection portion and the retention portion may extend in a direction approximately 180° to one another.

As previously stated, the connection portion is adapted for connection to one or more attachment portions located on the elevated work platform. The connection portion may be adapted for direct connection to the attachment portion, or may be connected to the attachment portion via one or more intermediate support members.

The connection portion may be adapted for fixed connection to the attachment portion (or one or more intermediate support members). In this embodiment of the invention, the connection member may be connected to the attachment portion by welding, brazing or similar technique. Alternatively, the connection portion may be connected to the attachment portion using one or more adhesives.

More preferably, the connection portion may be adapted for removable connection to the attachment portion (or the one or more intermediate support members). For instance, the connection portion may be connected to the support via one or more clamps, hook and loop fasteners, clasps, ties, hooks, magnets or the like, or any suitable combination thereof.

Alternatively, the connection portion may be connected to the attachment portion (or the one or more intermediate support members) using one or more mechanical fasteners, such as, but not limited to, one or more screws, nails, bolts, rivets or the like, or any suitable combination thereof. In this embodiment of the invention, the connection portion may be provided with one or more apertures therein through which the one or more mechanical fasteners may enter the connection member. In some embodiments, the connection portion may be provided with one or more bores extending through a body thereof, and through which the one or more mechanical fasteners may pass to connection the connection portion to the rail portion (or the one or more intermediate support members).

Preferably, the attachment portion (or the one or more intermediate support members) may be adapted to receive and retain at least a portion of the connection portion therein. The one or more attachment portions may be of any suitable form. In some embodiments of the invention, the attachment portions are located in posts or rails of an elevated work platform, or on the surface (such as a wall) of an elevated work platform, and allow for connection of the assembly to a point on the elevated work platform. The assembly may be fixed against movement relative to the attachment portion, or may be capable of movement relative to the attachment portion.

More preferably, however, the attachment portions comprise rail portions. In this embodiment of the invention, the rail portions may include one or more apertures or recesses into which the connection portion is at least partially received and retained. The connection portion may be retained in any suitable manner, such as frictional engagement, screw-threaded engagement, snap engagement, through the use of one or more locking members or the like, or any suitable combination thereof.

In some embodiments of the invention, the rail portions may include one or more slots, channels or grooves (hereinafter referred to collectively as "channels") adapted to receive and retain at least a portion of the connection portion therein. Preferably, the connection portion may include a key portion adapted to be at least partially received within the channel in the rail portion. The key member may be of any suitable size, shape or configuration, although it is envisaged that the key member may be of complementary dimensions and configuration to the channel so that the key member may be received and retained therein.

The key member may be formed integrally with the connection portion, or may be formed separately therefrom and adapted for fixed or removable connection thereto. In embodiments of the invention in which the key member is formed separately to the connection portion, the key member may be adapted for connection to the connection portion using one or more fasteners (nails, rivets, bolts, screws or the like), adhesives, magnets, clamps, clasps, ties, zips, snap fittings, hook and loop fasteners or the like, or any suitable combination thereof.

It is envisaged that at least a portion of the key member may be in the form of one or more projections that extend outwardly from the connection portion. The one or more projections may be at least partially received within the channel.

In this embodiment of the invention, it is envisaged that, once received in the one or more channels, the connection portion (and therefore the connection member) may be capable of movement relative to the support. For instance, the connection portion may be capable of sliding movement within the one or more channels. Thus, the connection portion may be capable of sliding movement relative to the rail portion once received in the one or more channels. The rail portions may be positioned substantially horizontally, substantially vertical, or at an angle between the vertical and horizontal. Thus, the connection portion may be capable of movement relative to the rail portion at the angle at which the rail portion is positioned.

By allowing the connection portion to move relative to the rail portion, the position of the connection portion (and therefore the connection member) relative to the support may be adjusted during use. This may be particularly useful as, for instance, a worker moves around the elevated work platform.

In some embodiments of the invention, the one or more rail portions may be formed separately to the elevated work platform and adapted for fixed or removable connection thereto. Thus, in this embodiment of the invention, the one or more channels may be retrofitted to an existing elevated work platform. In other embodiments of the invention, the one or more rail portions may be formed integrally with the elevated work platform. For instance, the rail portions may form at least one of the posts or rails (including a handrail) of an elevated work platform. More specifically, the one or more channels may be integrally formed with a bucket of an elevated work platform. In embodiments of the invention in which the bucket is lined (such as with an insulating material) the one or more channels may be integrally formed with the bucket liner. The one or more rail portions may be formed or located on an inner surface of the elevated work platform, bucket or bucket liner, or on an external surface of the elevated work platform, bucket or bucket liner. By "inner surface" it is meant that the rail portion is located on the portion of the elevated work platform, bucket or bucket liner that is within the area of the elevated work platform where a person is located during use. By "external surface" it is meant a surface of the elevated work platform, bucket or bucket liner that is not located within the area where a person is located during use.

In a preferred embodiment of the invention, the elevated work platform is or includes a bucket. Alternatively, the elevated work platform may include a bucket liner.

The rail portions may be provided at any suitable location on the elevated work platform. For instance, the rail may form part of the upper periphery of the elevated work platform. Thus, in this embodiment, the rail portion may form a handrail. Alternatively, the rail portion may be located at a point between the base or floor of the elevated work platform and the upper periphery of the elevated work platform.

In embodiments of the invention in which the elevated work platform comprises a bucket, the rail portions may be located in or underneath a handrail, or in the lip defining the upper perimeter of the bucket.

It is envisaged that the one or more channels may extend at least partially about the periphery of the elevated work platform. In some embodiments, the one or more channels may extend entirely about the periphery of the elevated work platform.

A channel may be provided on any suitable part of the rail portion. For instance, a channel may be provided on an interior surface of the rail portion (i.e. the portion of the rail portion facing into the bucket). Alternatively, a channel may be provided on an exterior surface of the rail portion (i.e. the portion of the rail portion facing away from the bucket). In some embodiments of the invention, a channel may be provided on both the interior surface and the exterior surface of the rail portion. In this way, a retention member may be connected (via the connection member) to the interior surface of the rail portion if ready access to the one or more objects is required. Alternatively, a retention member may be connected (via the connection member) to the exterior surface of the rail portion if space for working is required within the elevated work platform.

In some embodiments of the invention, the one or more channels may include at least one open end. In this manner, the connection portion may be inserted into an open end of the channel. Alternatively (or in addition) to this, the one or more channels may also include one or more openings between the opposed ends of the channel. The one or more openings may be provided at any suitable location between the opposed ends of the channel. It is envisaged that a connection portion may be inserted into the one or more openings in order to connect the connection member to the channel. This may be advantageous if the end of the channel is difficult to access, or is inconvenient to access due to its distance from the user. Once connected, it is envisaged that the connection member may be adapted to move relative to the channel.

The channel may be provided with one or more stop members therein. In this embodiment, the one or more stop members may define the limit of movement of the connection member relative to the channel, for example by providing a physical barrier beyond which the connection portion is unable to move. The stop members may be of any suitable form, such as one or more blocks or the like fixed in position within the channel.

In some embodiments, the connection member may be locked relative to the channel so as to substantially preclude movement relative thereto. The connection member may be locked to the channel using any suitable technique. Preferably, however, one or more locking member may be provided to lock the connection member against movement relative to the channel. The locking members may comprise one or more clamps, clasps, lockable stops or the like. Alternatively, the locking members may include one or more fastening members (screws, bolts, pins or the like) adapted to temporarily connect the connection member to the channel so as to prevent movement relative thereto. In this embodiment of the invention, the channel may be provided with one or more locking apertures therein through which the fastener may extend so as to either abut with or attach to the connection member, thereby preventing movement of the connection member relative to the channel. It is envisaged that the connection member may be locked against movement relative to the channel when a user requires that the connection member (and therefore the retention portion) stays in the same place during use, or during transportation or movement of the elevated work platform.

In an alternative embodiment of the invention, the connection portion may comprise a receiving portion. In this embodiment of the invention, the rail portion may be provided with one or more key members thereon.

The key members may be of any suitable size, shape or configuration, although it is envisaged that the key member may be of complementary dimensions and configuration to the receiving portion of the connection member so that the key member may be received and retained therein. The receiving portion may be of any suitable form, although in a preferred embodiment of the invention, the receiving portion may be in the form of an aperture, slot, groove or channel adapted to receive and retain the key member therein.

The key members may be formed integrally with the rail portion, or may be formed separately therefrom and adapted for fixed or removable connection thereto. In embodiments of the invention in which the key members are formed separately to the rail portion, the key member may be adapted for connection to the rail portion using one or more fasteners (nails, rivets, bolts, screws or the like), adhesives, magnets, clamps, clasps, ties, zips, snap fittings, hook and loop fasteners or the like, or any suitable combination thereof.

The key member may be of any suitable size, shape or configuration, although it is envisaged that the key member may be of complementary dimensions and configuration to the receiving portion of the connection member so that the key member may be received and retained therein.

Preferably, the key member may be provided in the form of a single member extending along at least a portion of the rail portion. More preferably, the key member may be provided in the form of a single member extending along substantially the entire length of the rail portion.

It is envisaged that at least a portion of the key member may be in the form of one or more projections that extend outwardly from the rail portion. The one or more projections may be at least partially received within the receiving portion of the connection member. In this embodiment of the invention, it is envisaged that, once received in the receiving portion of the connection member, the connection member may be capable of movement relative to the rail portion. For instance, the connection member may be capable of sliding movement relative to the key member (and therefore the rail portion).

By allowing the connection member to move relative to the rail portion, the position of the connection member (and therefore the retention member) relative to the rail portion may be adjusted during use. This may be particularly useful as, for instance, a worker moves around an elevated work platform.

In some embodiments of the invention, a pair of connection members may be used to connect the retention member to the rail portion. In this embodiment, it is envisaged that a first connection member may be connected to the rail portion in a manner described herein. A second connection member may be connected to the retention member in a manner described herein. The first connection member and the second connection may be connected to one another in order to connect the retention member to the rail portion. More preferably, the first connection member and the second connection member may each be connected to a bracket member positioned between the rail portion and the retention member.

The bracket member may be of any suitable size, shape or configuration. It is envisaged, however, the bracket member may be adapted to improve the stability of the assembly, preferably by preventing pivoting movement of the retention member relative to the rail portion and/or to maintain the retention member in a substantially upright position.

The bracket member may be fabricated from any suitable material, such as metal, plastic, fibreglass or the like. The bracket member may be fabricated from the same material, or combination of materials, as the rest of the assembly or may be fabricated from a different material or combination of materials.

In a preferred embodiment of the invention, the bracket member may be adapted to abut the retention member in use. In another embodiment of the invention, the bracket member may be adapted to abut a surface of the elevated work platform in use. In a preferred embodiment of the invention, the bracket member may be adapted to abut both the retention member and a surface of the elevated work platform in use.

The one or more intermediate support members may be of any suitable form. For instance, the one or more intermediate support members may comprise a member adapted to be located on a portion of the elevated work platform. For instance, the intermediate support member may be adapted to be hung on or otherwise attached to a rail or post of the elevated work platform. It is envisaged that the intermediate support member may be provided with one or more support surfaces to which the connection member may be connected in fixed or removable attachment. In some embodiments of the invention, the support surfaces may comprise one or more brackets or boards. It is envisaged that one or more connection members may be integrally formed with the brackets or boards, so as to allow the connection of a retention member thereto.

In some embodiments of the invention the intermediate support member may be provided with one or more attachment members adapted to allow the intermediate support member to be attached to the rail or post. Any suitable attachment members may be provided, such as, but not limited to, one or more clamps, clasps, ties, bolts (for example, U-bolts) or the like, or a combination thereof. In other embodiments of the invention, the attachment members may comprise one or more hook members adapted to hook over and/or around a rail or post of the bucket. In some embodiments of the invention, the attachment members may be provided with one or more rollers, wheels or the like adapted to allow sliding movement of the intermediate support member relative to the post or rail.

In a preferred embodiment of the invention, the one or more support surfaces may be provided with one or more support receiving portions adapted to receive and retain at least a portion of the connection member therein. The one or more support receiving portions may be of any suitable form. For instance, the support receiving portions may comprise one or more apertures or recesses into which the connection portion is at least partially received and retained. The connection portion may be retained in any suitable manner, such as frictional engagement, screw-threaded engagement, snap engagement, through the use of one or more locking members or the like, or any suitable combination thereof.

In some embodiments of the invention, the support receiving portions may include one or more slots, channels or grooves (hereinafter referred to collectively as "channels") adapted to receive and retain at least a portion of the connection member therein. Preferably, the connection portion may include a key portion adapted to be at least partially received within the channel in the intermediate support. The key member may be of any suitable size, shape or configuration, although it is envisaged that the key member may be of complementary dimensions and configuration to the channel so that the key member may be received and retained therein.

In one embodiment, the intermediate support member may be provided with a plurality of support receiving portions. In this way, a plurality of retention members may be connected to the intermediate support member via connection members. It is envisaged that, by providing the ability to connect a plurality of retention members to the intermediate support member, a combination of retention members to suit the particular task or job to be conducted may be attached. For instance, retention members that include object retention portions adapted to retain certain tools (for instance, a drill) therein may be provided in conjunction with retention members that include object retention portions adapted to retain complementary objects (such as, for instance, drill bits, screws etc.). Thus, it is envisaged that a user may be able to customise the intermediate support member so that retention members needed to complete the task or job (i.e. retention members that include object retention portions adapted to retain specific objects required for the task) may be attached thereto.

The retention member and the retention portion may be adapted for removable connection to one another using any suitable technique. For instance, one or more fasteners (bolts, screws or the like) may be used to removably connect the retention member to the retention portion. Alternatively one or more connection mechanism (such as ties, clamps, clasps, hook and loop connectors or the like) may be provided. In some embodiments of the invention, the retention portion and the retention member may be adapted for connection to one another via one or more receiving portions. Preferably, the retention portion and the retention member may be adapted for removable connection to one another via one or more receiving portions. The receiving portions may be of any suitable form. Preferably, however, the receiving portions are of sufficient size and shape to receive and retain at least a portion of the retention portion and/or the retention member. Thus, it is envisaged that the receiving portions may comprise the retention portion or may be provided on the retention member. In some embodiments of the invention, a portion of the retention portion may be received and retained in a receiving portion located on the retention member, while in other embodiments of the invention, substantially all of the retention portion may be received and retained in a receiving portion. Similarly, a portion of the retention member may be received and retained in a receiving portion located on the connection member.

In embodiments of the invention in which the one or more receiving portions are located on the retention member, the retention member may be provided with one receiving portion. Alternatively, in other embodiments, the retention member may be provided with a plurality of receiving portions. It is envisaged that, in this embodiment of the invention, each receiving portion may be adapted to receive a connection member. Thus, the retention member may be connected to the support via one or more connection members.

As previously stated, the connection member and the retention member are adapted for removable connection to one another.

The receiving portions may receive the retention portion or retention member in any suitable manner. For instance, the receiving portions may comprise openings or cavities within the retention member in which at least a portion of the retention portion is received. Alternatively, the receiving portions may comprise one or more slots, channels, recesses or the like in which at least a portion of the retention member may be received.

The connection member and the retention member may be retained in connection with one another using any suitable technique. For instance, the retention portion and the receiving portion may be provided with complementary screw-threaded portions adapted to screw-threadedly connect the connection member to the retention member. Alternatively, the retention portion and the receiving portion may be retained in connection with one another using another technique, such as, but not limited to, a snap connection, a frictional connection or the like. In some embodiments of the invention, at least a portion of retention portion, the retention member and/or the receiving portion may be subject to elastic deformation in order to connect the connection member to the retention member.

In some embodiments of the invention, the receiving portion may be provided with one or more locking members adapted to lock the connection member in place within the receiving portion. Any suitable locking members may be used, such as one or more straps, ties, locks, pins, clamps, clasps, biasing members or the like, or any suitable combination thereof.

In a specific embodiment of the invention, the retention portion or retention member and the receiving portion may be brought into connection with one another via a sliding movement of the retention portion or retention member and the receiving portion relative to one another. Thus, in this embodiment, it is envisaged that the retention portion or retention member may be at least partially received in the receiving portion by sliding the retention portion or retention member into the receiving portion.

In this embodiment of the invention, the retention portion or retention member may be retained within the receiving portion using any suitable technique. For instance, the retention portion or retention member may be retained in a frictional connection with the receiving portion or a snap-fitted connection with the receiving portion. Alternatively, the receiving portion may be provided with one or more locking members adapted to substantially preclude movement of the retention portion and the retention member against movement relative to one another.

In another embodiment of the invention, the retention portion or retention member and the receiving portion may be oriented in such a manner as to result in the retention of the retention portion or retention member within the receiving portion. For instance, in a preferred embodiment it is envisaged that the retention portion and the retention member may be oriented relative to one another in use such that the receiving portion may be lowered onto the retention portion or retention member. More specifically, the receiving portion may be lowered substantially vertically downwards onto the retention portion or retention member in use.

In this embodiment of the invention, the receiving portion may be provided with an abutment surface against which the retention portion or retention member may abut in use. In this way, the abutment of the retention portion or retention member with the abutment surface may define the limit of insertion of the retention portion or retention member into the receiving portion. It is envisaged that, in use, the abutment surface may comprise an upper wall of the receiving portion. Preferably, therefore, the retention member may only be removed from connection with the connection member by moving either the retention member or the retention portion substantially vertically relative to the other of the retention portion or the retention member in order to withdraw the retention portion or retention member from the receiving portion.

It is envisaged that, by connecting the retention portion and the retention member in this manner, the likelihood of the accidental or unwanted removal of the retention member from the retention portion may be reduced or eliminated.

In a preferred embodiment, the receiving portion may comprise a slot or channel (hereinafter referred to collectively as a "channel") within the retention member or retention portion. Preferably, the channel may be defined by one or more walls. In some embodiments of the invention, the channel may be defined by an upper wall (preferably, the abutment surface), and one or more side walls. Preferably, the one or more side walls may reduce or eliminate lateral movement of the retention member relative to the retention portion. Preferably, reducing or eliminating lateral movement of the retention member relative to the retention portion may prevent the retention portion and the retention member from disengaging from one another by any movement other than a substantially upward vertical movement of the retention member relative to the retention portion, or vice versa.

In some embodiments of the invention, the retention portion or the retention member may be provided with an abutment portion adapted to abut the abutment surface of the receiving portion. The abutment portion may be of any suitable shape, size or configuration, and may be any suitable part of the retention portion or the retention member. In one embodiment, the abutment portion may comprise at least a portion of an edge portion of the retention portion or the retention member. In some embodiments of the invention, the retention portion may comprise at least a first face and an opposed second face spaced apart from one another by the edge portion of the retention portion. Preferably, the abutment portion may also abut at least one of the one or more side walls of the channel in use.

Preferably, the retention portion or retention member may comprise a plurality of abutment portions. In this embodiment of the invention, the retention portion or the retention member may comprise a plurality of stepped portions, wherein at least two of the plurality of stepped portions include edge portions that act as abutment portions. The stepped portions may be of the same size as each other. More preferably, however, at least two of the plurality of stepped portions are of different sizes to one another.

In another embodiment of the invention, the retention portion and the retention member may comprise a body and one or more flange portions associated therewith. Preferably, the body and at least one of the one or more flange portions may be provided with edge portions that act as abutment portions.

The edge portions may be of any suitable shape and configuration. For instance, each edge portion may be substantially straight. Alternatively, at least one of the edge portions (such as one or both opposed side edges) may be tapered or stepped or the like in order to provide greater contact between the edges and the abutment surface and/or to enhance the retention of the retention portion or the retention member within the receiving portion.

Preferably, the receiving portion may be provided with a plurality of abutment surfaces against which the plurality of abutment portions may abut during use.

As previously stated, the retention member further comprises an object retention portion adapted to retain one or more objects. The objection retention portion may be of any suitable form. For instance, the object retention portion may comprise a receptacle into which one or more objects may be placed. The receptacle may be of any size, shape or configuration, although in a preferred embodiment of the invention, the receptacle may comprise a bucket, basket, holster, container, storage pouch or the like, or a combination thereof.

Any suitable objects may be retained in the object retention portion. However, in embodiments of the invention in which the connection assembly is used in associated with an aerial platform, it is envisaged that the one or more objects may comprise one or more tools (hand tools, power tools, measurement tools etc), although the one or more objects may also include writing implements, notepads or the like, consumables (such as wire, welding rods, chemicals or the like) or any suitable combination thereof.

In an alternative embodiment of the invention, the object retention portion may comprise one or more holding members adapted to hold an object. Any suitable holding members may be provided, such as, but not limited to, one or more hooks, ties, straps, clamps, clasps or the like, or any suitable combination thereof. In this embodiment, it is envisaged that an object (for instance, a power tool) may be retained on the object retention portion via the one or more holding members.

In some embodiments of the invention, the object retention portion may comprise a container adapted to hold one or more specific objects. For instance, the object retention portion may be shaped so as to house one or more specific objects. In this embodiment of the invention, the object retention portion may be provided with one or more recesses having a complementary shape to a specific object (such as a tool or the like) in which the object may be at least partially received and retained. For instance, the recesses may be moulded to the shape of a specific object and/or may include one or more retention members (such as one or more tabs, projections or the like) that retain the object in place within the recess.

Alternatively, the container may be divided into a plurality of regions into which an object may be placed. Preferably, each region may be sized or shaped to accommodate a specific object (such as a specific tool), although in an alternative embodiment the regions may simply comprise a cavity or space in which an object may be received. The objects may be of any suitable type, such as power tools (drills, screwdrivers, nail guns, angle grinders, nibblers, sanders, reciprocating saws, rivet guns or the like), hand tools (hammers, wrenches, screwdrivers, pliers, saws, chisels, snips or the like), measuring devices (such as spirit levels, meters (such as multimeters, amp meters, voltage meters, temperature meters, anemometers or the like), hardware items (nails, screws, nuts and bolts, rivets, washers, gaskets or the like), writing implements, safety equipment (safety glasses, ear plugs, locks, tags, flags or the like) or any suitable combination thereof. While some examples of suitable objects have been provided, it will be understood that this list is not intended to be exhaustive, and the actual objects may be dependent on the nature of the work to be conducted while on the aerial platform.

In embodiments of the invention in which a power tool is retained in the object retention portion, it is envisaged that the object retention portion may include a trigger guard. Any suitable trigger guard may be provided, although it will be understood that the purpose of the trigger guard may be to prevent the unwanted or accidental actuation of the power tool while it is in the object retention portion.

The trigger guard may be of any suitable size, shape or configuration. In some embodiments of the invention, however, the trigger guard may comprise a cut out portion in a surface of the object retention portion. In this way, the cut out portion forms a slot into which at least a portion of the power tool may be received. In this embodiment, as the power tool is being received in the object retention portion, the power tool may be positioned in such a way that its trigger is received in the trigger guard. The chance of accidental or unwanted actuation of the power tool may therefore be reduced or eliminated. In an alternative embodiment of the invention, an interior portion of the object retention portion may be shaped (for instance by moulding) to have a complementary shape to the trigger of a power tool such that the power tool may be received in the object retention portion while reducing or eliminating the possibility of the unwanted or accidental actuation of the power tool.

The object retention portion may be provided with one or more strap members. The strap members may be of any suitable form, and may be fabricated from any suitable material. However, it is envisaged that, when an object is placed in the object retention portion, the one or more strap members may be secured over an open upper end of the object retention portion so as to retain the objects within the object retention portion. The strap members may be brought into abutment with the object, or may simply be secured over the open end of the object retention portion.

Preferably, the object retention portion may include one or more drainage apertures. The drainage apertures may be provided in any suitable part of the object retention portion. However, in a preferred embodiment of the invention, the one or more drainage apertures may be provided in a lower portion (such as a lower surface) of the object retention portion. It will be understood that the purpose of the one or more drainage apertures may be to allow fluid (such as water) in the object retention portion to exit the object retention portion through the one or more drainage apertures. The drainage apertures may simply comprise openings through the object retention portion. Alternatively, at least one of the one or more drainage apertures may be provided with a grate, screen or the like in order to prevent larger objects from passing through the apertures.

It is envisaged that, in some embodiments, the base portion may be provided with a sloping surface. Any suitable sloping surface may be provided, although it is envisaged that the sloping surface may be adapted to direct a flow of liquid towards the one or more drainage apertures.

In some embodiments of the invention, a base portion of the retention member may be adapted for removable connection thereto. In some embodiments of the invention, the base portion may be adapted for removal so as to facilitate drainage from and/or cleaning of the object retention portion. In other embodiments of the invention, the base portion may be removed and replaced with a different base portion that is adapted for a particular use (e.g. shaped to hold a particular object, such as, but not limited to, drill bits or the like). The base portion may be removably connected to the retention member using any suitable technique. For instance, the base portion and the retention member may be adapted for screw-threaded connection to one another. Alternatively, the base portion may be adapted for sliding connection, frictional connection, hinged connection or the like, or a combination thereof.

Preferably, the upper end of the object retention portion may be provided with a closure member. Any suitable closure member may be provided, such as, but not limited to, a cap, cover or lid. The closure member may be adapted to close the object retention portion in any suitable manner. For instance, the closure member may be adapted for removal from the object retention portion so as to allow access to the object retention portion. Thus, the closure member may be adapted to be screw-threadedly connected, frictionally connected, slidingly connected to the object retention portion and so on. In other embodiments of the invention, the closure member may be adapted for hinged or pivoting connection to the object retention portion. Alternatively, the closure member may be adapted to close the object retention portion via one or more closure mechanisms, such as one or more zips, buttons, press studs or the like, or any suitable combination thereof.

In some embodiments of the invention, the connection assembly may further comprise one or more spacer members. The spacer members may be of any suitable form, although it is envisaged that the spacer members may be adapted to reduce or eliminate lateral or pivoting movement of the retention portion relative to the support.

Preferably, the spacer members are adapted for fixed or removable connection to the retention portion, although it is also envisaged that the spacer members may be formed integrally with the retention portion. In use, when the retention portion is connected to the support via the connection portion, it is envisaged that the spacer member may be positioned so as to be placed in close proximity to, or abutment with, the support. In this way, the presence of the spacer block may preclude pivoting movement of the retention portion relative to the support (when the spacer block is in abutment with the support), or may allow only relatively minor pivoting movement (when the spacer member is in close proximity to the support movement, and pivoting movement of the retention portion brings the spacer member into abutment with the support).

The spacer member may be of any suitable form, although in some embodiments of the invention, the spacer member may comprise a block. The spacer member may be connected to the retention portion using any suitable technique. For instance, the spacer member may be connected to the retention portion via one or more clamps, hook and loop fasteners, clasps, ties, hooks, magnets or the like, or any suitable combination thereof. Alternatively, the spacer member may be connected to the retention portion using one or more mechanical fasteners, such as, but not limited to, one or more screws, nails, bolts, rivets or the like, or any suitable combination thereof.

The retention member (and, more specifically, the object retention portion) may be provided with one or more light sources. Preferably, the one or more light sources may be adapted to illuminate the interior of the object retention portion so that a user may readily view the contents of the object retention portion. This may be of particular use when the connection assembly is used at night, or in poorly-lit environments.

Any suitable light source may be provided, such as one or more incandescent light bulbs, halogen light bulbs, light-emitting diodes (LED) or the like, or a combination thereof. Preferably, the light source may comprise one or more LEDs, and may be in the form of a plurality of individual LEDs, an LED strip or the like. While the LEDs may illuminate any part of the object retention portion, it is preferred that the LEDs may be provided so as to illuminate the interior or the object retention portion, and particularly all the way to the base of the object retention portion. The LEDs may be provided on any suitable part of the retention member, although in a preferred embodiment of the invention, the object retention portion may be provided with one or more lands therein, and the LEDs may be provided on a lower surface of the lands. In this way, the LEDs may be angled downwards into the object retention portion, but may also be protected from coming into contact with objects entering or being removed from the object retention portion.

The one or more LEDs may be powered by any suitable power source. For instance, the LEDs may be adapted for connection to mains power, a generator, one or more photovoltaic cells or the like. More preferably, however, the retention portion may be provided with a battery housing portion adapted to house one or more batteries therein. Thus, in this embodiment of the invention, the LEDs may be powered by the one or more batteries. Preferably, the LEDs may be electrically associated with one or more switches. In this way, a user may switch the LEDs on and off as required.

The batteries may be of any suitable form, and may provide any suitable electrical output. For instance, in some embodiments of the invention, the batteries may simply power the light sources. In other embodiments, the batteries may be used as the power source for a power tool. In this embodiment of the invention, the retention portion may be provided with one or more electrical sockets to which an item (such as a power tool, light, charger etc.) may be electrically connected.

In some embodiments of the invention, one or more rail portions may be provided with a light source. The light source used in the rail portion may be of the same configuration as that used in the retention member.

In some embodiments of the invention, the assembly may further comprise a work surface. The work surface may be provided at any suitable location, although in a preferred embodiment of the invention, the work surface may be provided in an upper region of the connection assembly. More specifically, the work surface may be located above at least a portion of the retention portion. Thus, in some embodiments, the work surface may comprise, or be associated with, the closure member. Alternatively, and especially in embodiments of the invention in which no closure member is present, the work surface may be adapted to overlie the upper end of the object retention portion.

In an alternative embodiment of the invention, the work surface may be associated with an intermediate support member. In this embodiment of the invention, the work surface may be associated with the intermediate support member in any suitable manner (such as being hingedly, slidably, pivotably or foldably associated therewith).

Preferably, the work surface may be adapted to allow a user to conduct work thereon. Any suitable work may be conducted, and it will be appreciated that the work conducted on the work surface will be entirely dependent on the task at hand. However, it is envisaged that the work surface may be substantially planar so as to provide a flat surface on which to work. In other embodiments of the invention, the work surface may be shaped, for instance to retain tools or the like thereon. For instance, the work surface may be provided with a raised periphery so as to reduce or eliminate the possibility of objects rolling off the edge of the work surface.

The connection assembly may be fabricated from any suitable material, or combination of materials. For instance, the connection assembly may be fabricated from metal, plastic, wood, fibreglass or the like, or a combination thereof.

Preferably, the connection member may be fabricated from metal (such as steel, aluminium or the like) or plastic, and, in particular, a relatively durable plastic such as polycarbonate, polyethylene, polypropylene, polystyrene, polyvinyl chloride, acrylonitrile butadiene styrene and the like, or any suitable combination thereof. The retention member may be fabricated from the same material as the connection member, or from a different material.

In some embodiments of the invention, the retention member may be fabricated from a combination of materials. For instance, the receiving portion (if present) may be fabricated from a relatively rigid material, such as metal or plastic, while the object retention portion may be fabricated from a different relatively rigid material, or from a relatively flexible material, such as a polymeric sheet material, or natural material such as cotton, linen, canvas, leather or the like.

In some embodiments, the connection assembly may be at least partially fabricated from a material having particular properties. For instance, the connection assembly may be at least partially fabricated from a non-conductive material. Similarly, the connection assembly may be at least partially fabricated from a material having insulating properties, UV resistance properties, chemical resistance properties, thermal resistance properties and the like, or a combination thereof. In the case of a material having UV resistance properties, it is envisaged that a material such as, but not limited to, carbon black may be added to a polymer matrix from which the assembly is at least partially fabricated.

In a particular embodiment of the invention, the connection assembly may be at least partially fabricated from a fibre reinforced polymer (FRP). Any suitable fibres and polymer may be used. However, in a preferred embodiment of the invention, the fibres may be carbon or aramid fibres. More preferably, the fibres may be glass fibres. Any suitable polymer matrix may be used, although in some embodiments, the polymer matrix may comprise a polyester, epoxide, polyamide, polycarbonate, polyoxymethylene, polypropylene, polybutylene terephthalate, vinyl ester or the like, or any suitable combination thereof.

In some embodiments of the invention, a combination of materials may be used. For instance, the rail portions may be fabricated from an FRP, while other parts of the assembly may be fabricated from other materials. For instance, in a particular embodiment of the invention, the connection member and/or the retention member may be at least partially fabricated from a material such as high density polyethylene (HDPE), polypropylene or the like, or a combination thereof.

In a specific embodiment of the invention, the assembly (or components thereof) may be fabricated from a non-conductive material. Any suitable non-conductive material may be used.

It will be understood that the connection assembly may include at least the connection member and the retention member. However, the connection assembly may, in addition, include the rail portions.

Thus, in a second aspect, the invention resides broadly in an elevated work platform including one or more rail portions defining at least a portion of the periphery of the elevated work platform, the one or more rail portions adapted to at least partially receive a connection member therein, the connection member being adapted for removable connection to a retention member, the retention member further comprising an object retention portion adapted to retain one or more objects.

In a preferred embodiment of the invention, the connection member comprises the connection member of the first aspect. Thus, it is envisaged that the one or more rail portions may be adapted to at least partially receive the connection portion of the first aspect.

In a preferred embodiment of the invention, the elevated work platform is or includes a bucket. Alternatively, the elevated work platform may include a bucket liner.

The present invention provides numerous advantages over the prior art. By locating the connection assembly on a portion of the aerial platform, rather than on the person of a worker, objects within the object retention portion (such as tools and the like) may be shared between multiple workers. In addition, a worker may move around the aerial platform unencumbered by a tool belt or similar device.

Further, the connection assembly ensure that the objects in the object retention portion are securely retained, and the likelihood of these being dropped from a height is reduced in comparison to a tool belt carried by a person. This not only reduces time wasted retrieving dropped tools, but also reduces the possibility of damage to property or injury to people below.

Any of the features described herein can be combined in any combination with any one or more of the other features described herein within the scope of the invention.

The reference to any prior art in this specification is not, and should not be taken as an acknowledgement or any form of suggestion that the prior art forms part of the common general knowledge.

### BRIEF DESCRIPTION OF DRAWINGS:

Preferred features, embodiments and variations of the invention may be discerned from the following detailed description which provides sufficient information for those skilled in the art to perform the invention. The detailed description is not to be regarded as limiting the scope of the preceding summary of the invention in any way. The detailed description will make reference to a number of drawings as follows:
Figure 1 illustrates an isometric view of a connection assembly according to an embodiment of the present invention.
Figure 2 illustrates an isometric view of a connection assembly according to an embodiment of the present invention.
Figure 3 illustrates an isometric view of a connection member of a connection assembly according to an embodiment of the present invention.
Figure 4 illustrates a side view of a connection member of a connection assembly according to an embodiment of the present invention.
Figures 5A and 5B illustrate isometric views of a connection member of a connection assembly according to an alternative embodiment of the present invention.
Figure 6 illustrates an isometric view of a connection assembly according to an alternative embodiment of the invention.
Figure 7 illustrates an isometric view of a bucket including a connection assembly according to an embodiment of the invention.
Figure 8 illustrates a cut-away isometric view of an elevated work platform including a connection assembly according to an embodiment of the invention.
Figure 9 illustrates a cut-away isometric view of an elevated work platform including a connection assembly according to an embodiment of the invention.
Figure 10 illustrates a side view of the connection assembly illustrated in Figure 9.
Figure 11 illustrates an exploded view of the connection assembly illustrated in Figures 9 and 10.

### DESCRIPTION OF EMBODIMENTS:

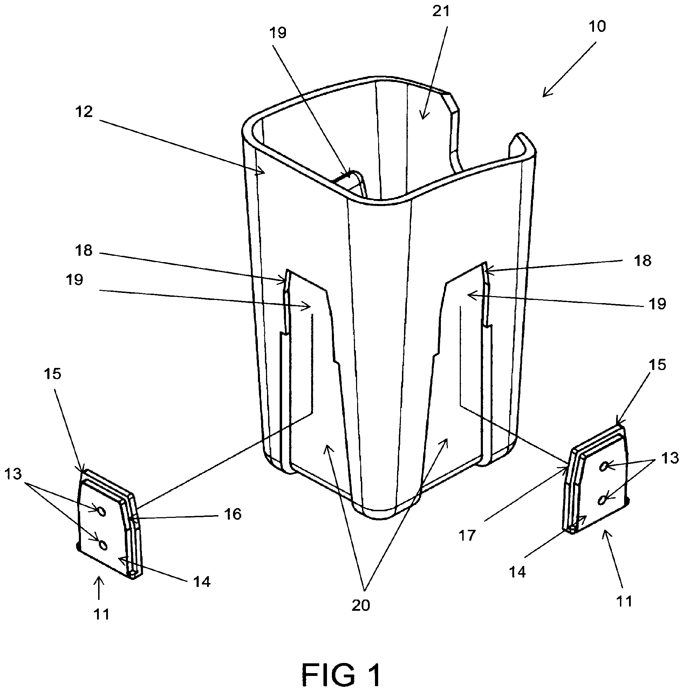

In Figure 1, an isometric view of a connection assembly 10 according to an embodiment of the invention is illustrated. The connection assembly 10 comprises a pair of connection members 11 and a retention member 12 adapted for removable connection to one another.

The connection members 11 are adapted for connection to a support (not shown). In the embodiment of the invention shown in Figure 1, each connection member 11 comprising a connection portion 14 having a pair of bores 13 therethrough through which a mechanical fastener (such as a screw, nail, bolt etc.) passes in order to secure the connection member 11 to the support (not shown).

In Figure 1, the connection members 11 are placed at approximately 90° to one another. It is envisaged that, in use, the connection members 11 may be connected to supports (not shown) positioned at approximately 90° to one another. For instance, the supports (not shown) may include guard rails of the cage or basket of an elevated work platform.

Each of the connection members 11 includes a connection portionl4 and a retention portion 15. The connection portion 14 and the retention portion 15 are of different sizes such that the connection portion 14 and the retention portion 15 form stepped portions of the connection member 11.

The edge 16 of the connection portion 14 and the edge 17 of the retention portion 15 each form an abutment portion adapted to abut an abutment surface 18 of a receiving portion 19 of the retention member 12. In use, it is envisaged that the connection members 11 will be connected to a support (not shown) and the retention member 12 will be moved substantially vertically downwardly relative to the connection members 11 such that each of the connection members 11 is received within a receiving portion 19. The retention member 12 is lowered into the connection members 11 until the upper portions of the edges 16, 17 of the connection members 11 abut the abutment surface of the receiving portion 19, thereby defining the limit of downward movement of the retention member 12 relative to the connection members 11. As the retention member 12 is retained on the connection members 11 by gravity, the chance of accidental or unwanted removal of the retention member 12 from the connection members 11 is reduced or eliminated. It is envisaged that the retention member 12 may only be removed from the connection member 11 by a user lifting the retention member 12 vertically upwardly relative to the connection members 11 such that the connection members 11 are removed from the receiving portions 19.

The receiving portions 19 illustrated in Figure 1 comprise channels in a side wall 20 of the retention member 12. The side wall 20, along with opposed side walls and an upper wall (i.e. the abutment surface 18) of the receiving portion 19 together define the channel.

It will be noted that the edges 16, 17 taper towards an upper region of the connection member 11. By providing the channel with a complementary shape to the edges 16, 17 of the connection members 11, lateral movement of the connection members 11 within the receiving portions 19 may be reduced or eliminated and/or the retention of the connection member 11 within the receiving portion 19 may be enhanced.

The retention member 12 shown in Figure 1 comprises three receiving portions 19 to provide the greatest flexibility to users in terms of the ability to connect the retention member 12 to a support (not shown) via the connection members 11.

The retention member 12 of Figure 1 includes an object retention portion 21 in the form of a holder or bucket into which objects (such as tools or the like) may be placed for storage when not in use.

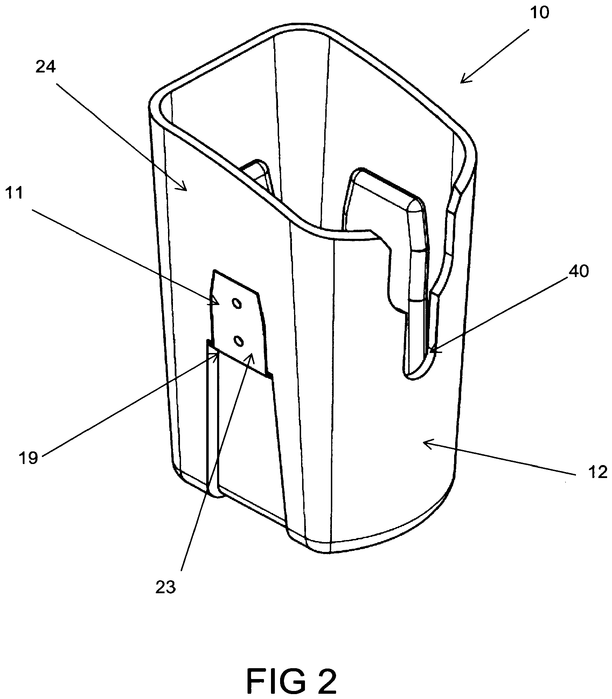

In Figure 2, an isometric view of a connection assembly 10 according to an embodiment of the invention is illustrated. The connection assembly 10 of Figure 2 is identical to that of Figure 1 with the exception that the connection members 11 have been received and retained in the receiving portions 19.

It is envisaged that, in use, the connection members 11 will be connected to a support (not shown) and will therefore be fixed in position. As a result, when the retention member 12 is connected to the connection members 11 (by way of receiving and retaining the connection members 11 in the receiving portions 19) the retention member 12 will be substantially precluded from movement relative to the connection members 11.

In the embodiment of the invention shown in Figure 2, the rear face 23 of the connection member 11 is located substantially flush with the wall 24 of the receiving portion 19 when connected.

The object retention portion 21 is provided with a cut out portion or slot 40 in a surface thereof. The cut out portion or slot 40 acts as a trigger guard, thereby allowing a power tool (not shown) to be received and retained in the object retention portion 21 while reducing or eliminating the possibility of the accidental or unwanted actuation of the power tool (not show) caused by the trigger abutting a surface or wall of the object retention portion 21.

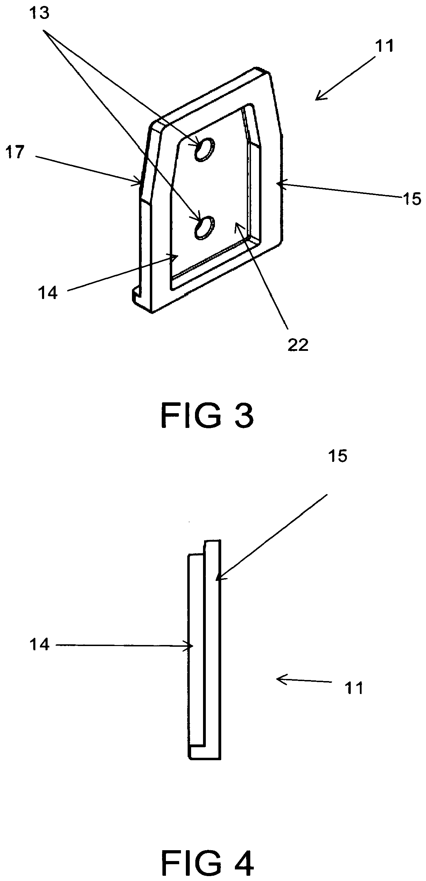

In Figures 3 and 4, an isometric view and a side view, respectively, of a connection member 11 according to an embodiment of the invention are shown.

The connection member 11 comprises a connection portion 14 through which a pair of bores 13 pass to allow connection of the connection member 11 to a support (not shown) using a mechanical fastener (not shown). The connection member 11 further comprises a retention portion 15. The retention portion 15 is larger than the connection portion 14 such that the connection portion 14 and the retention portion 15 form stepped portions as shown particularly in Figure 4. The edge 16 of the connection portion 14 and the edge 17 of the retention portion 15 each abut an abutment surface (not shown in these Figures) of the receiving portion (not shown in these Figures).

It will also be noted that the edge 17 of the retention portion 15 tapers towards an upper region of the connection member 11. The receiving portion (not shown in these Figures) is provided with a complementary shaped abutment surface such that the retention of the connection member 11 within the receiving portion may be enhanced.

The connection portion 14 and the retention portion 15 together define a recess 22 within the connection member 11. The recess 22 is provided, at least in part, so that when a mechanical fastener (not shown) passes through the bores 13 to connect the connection member 11 to a support (not shown) the head of the fastener may be retained within the recess 22. If the head of the fastener extended outwardly beyond the retention portion 15, it may be difficult, or even impossible, for the connection member 11 to be received and retained within the receiving portion (not shown in this Figure).

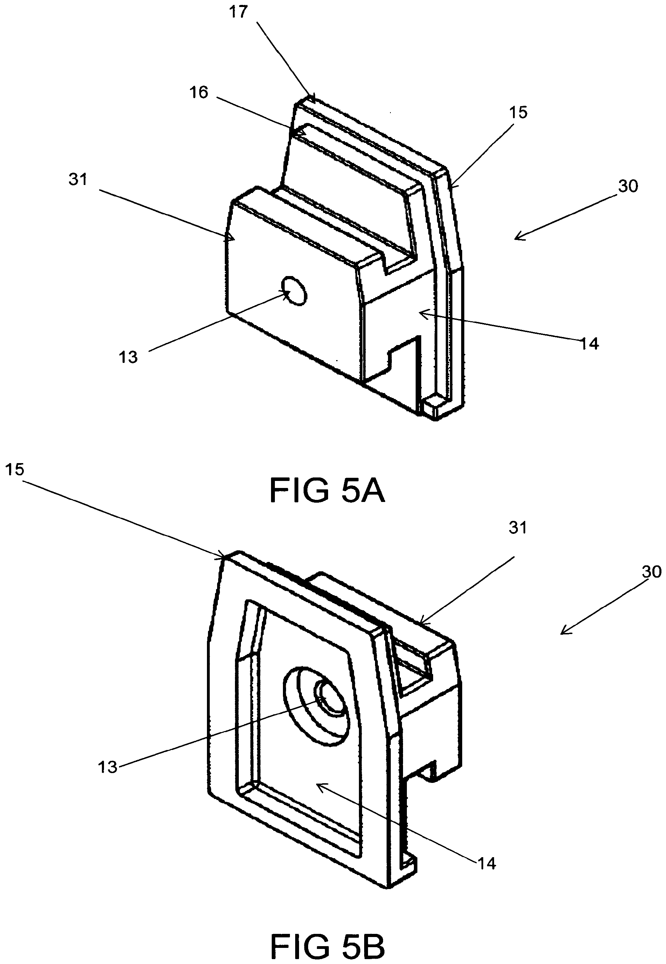

Figures 5A and 5B illustrate isometric views of a connection member 30 according to an alternative embodiment of the present invention. The connection member 30 is similar to the connection member shown in Figure 3 in that it comprises a connection portion 14 through which a bore 13 passes to allow connection of the connection member 30 to a support (not shown) using a mechanical fastener (not shown). The connection member 30 further comprises a retention portion 15. The retention portion 15 is larger than the connection portion 14 such that the connection portion 14 and the retention portion 15 form stepped portions as shown particularly in Figure 5A. The edge 16 of the connection portion 14 and the edge 17 of the retention portion 15 each abut an abutment surface (not shown in these Figures) of the receiving portion (not shown in these Figures).

Where the connection member 30 differs from that shown in Figure 3 is that the connection member 30 includes a key member 31 extending outwardly away from the retention portion 15. The key member 31 is adapted for connection to, and retention in, a channel (not shown) on a support (not shown) or intermediate support (not shown). It is envisaged that, when the key member 31 is retained in the channel (not shown), the connection member 30 may be adapted for sliding movement relative to the channel (not shown). In this way, the position of a retention member (not shown) connected to the connection member 30 may be adjusted.

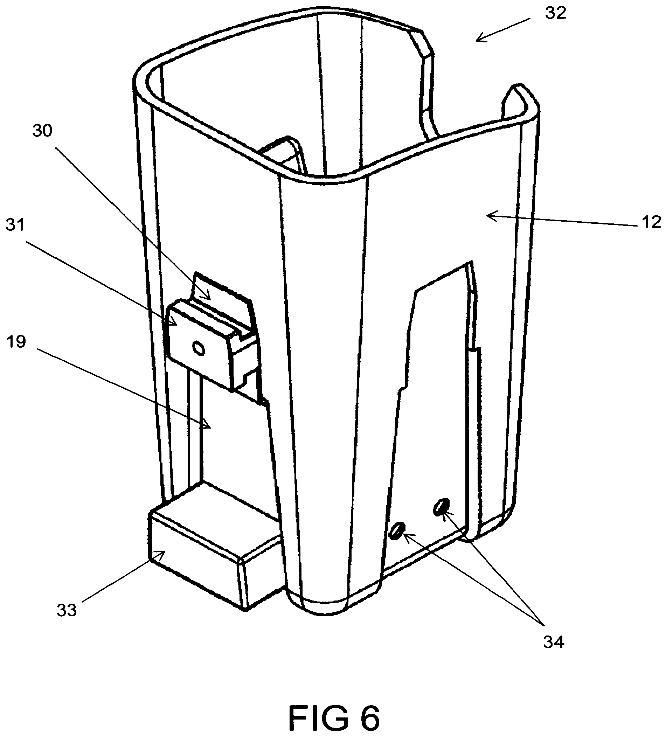

Figure 6 illustrates a connection assembly 32 according to an alternative embodiment of the invention. The connection assembly 32 is similar to that illustrated in Figure 2, with the exception that the connection member 30 of Figures 5A and 5B is received in the receiving portion 19. When retained in the receiving portion 19 as shown in Figure 6, the key member 31 projects outwardly from the connection member 31 and is adapted for connection to, and retention in, a channel (not shown).

A spacer member 33 may be seen connected to a lower region of the retention member 12. The spacer member 33 is fastened to the retention member 12 via a pair of apertures 34 through which mechanical fasteners such as screws or the like (not shown) may be passed to retain the spacer member 33 in position on the retention member 12.

The spacer member 33 is positioned below the connection member 31 such that, when the connection member 30 is connected to a channel (not shown) pivotal movement of the assembly 32 is reduced or eliminated. This is due to the fact that, if the assembly 32 pivots relative to the channel (not shown) the spacer member 33 will abut the underside of the channel (not shown) thereby preventing further pivoting movement).

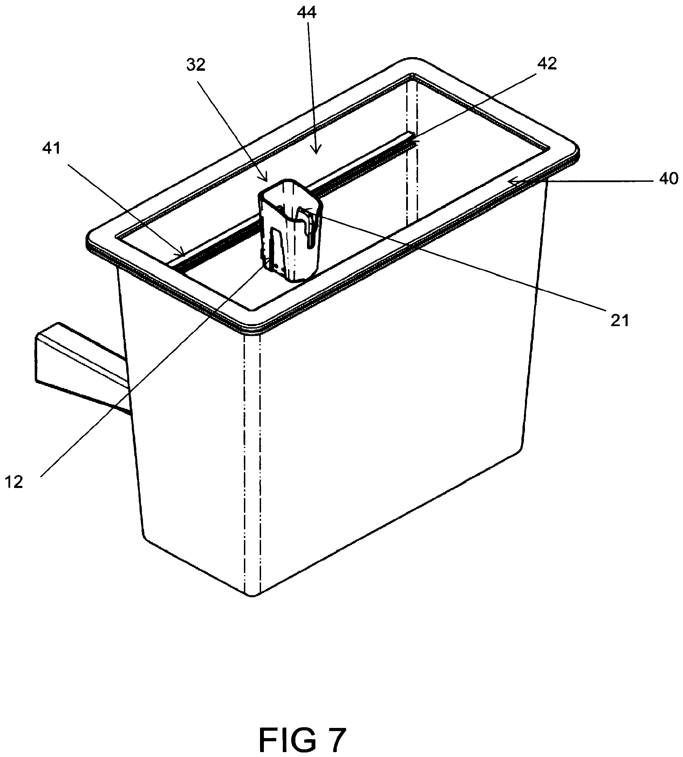

Figure 7 illustrates an isometric view of an elevated work platform in the firm of a bucket 40 including a connection assembly 32 according to an embodiment of the invention. The bucket 40 is the elevated work platform portion of a cherry picker or similar piece of equipment.

An attachment portion in the form of a rail portion 41 is provided on an inner surface of a wall 44 of the bucket 40. The rail portion 41 includes a channel 42 that extends along substantially the entire length of the rail portion 41.

The connection assembly 32 is essentially identical to that illustrated in Figure 6. The connection assembly 32 is connected to the rail portion 41 by inserting the key member (obscured) into the channel 42. The key member may slide into an end of the channel 42, or an insertion point may be provided between opposing ends of the channel 42 into which the key member may be inserted to connect the connection assembly 32 to the rail portion 41.

Once received and retained in the channel 42, the position of the connection assembly 32 may be adjusted by sliding the connection assembly 32 relative to the rail portion 41.

When the connection assembly 32 is connected to the rail portion 41, the retention member 12 faces inwardly into the interior of the bucket 40. This allows a worker in the bucket 40 to easily access the object retention portion 21 and the objects retained therein.

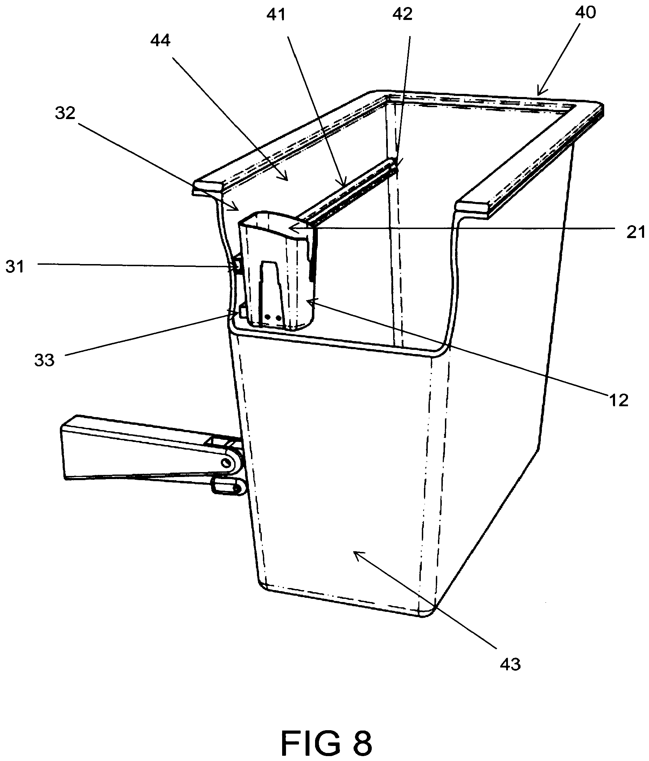

Figure 8 illustrates a cut-away isometric view of a bucket 40 including a connection assembly 32 according to an embodiment of the invention. The bucket 40 and connection assembly 32 are identical to those illustrated in Figure 7.

In Figure 8, the connection assembly 32 has been moved relative to an end of the rail portion 41 so that the connection assembly 32 is positioned adjacent to a side wall 43 of the bucket 40.

In this Figure, the key member 31 may be seen within the channel 42. In use, the key member 31 slides within and relative to the channel 42 in order to adjust the position of the connection assembly 32 relative to the rail portion 41.

Also visible in Figure 8 is a spacer member 33 in the form of a block connected to a lower region of the retention member 12. The spacer member 33 is positioned so as to abut the wall 44 of the bucket below the rail portion 41, thereby spacing the retention member 12 away from the wall 44. Not only does this prevent possible damage to the retention member 12 from hitting the wall 44 or sliding relative to the rail portion 41 while in contact with the wall 44, but it also ensures that the retention member 12 (and therefore the object retention portion 21) is maintained in a more upright position. This assists in preventing objects within the object retention portion 21 from accidentally falling out during use.

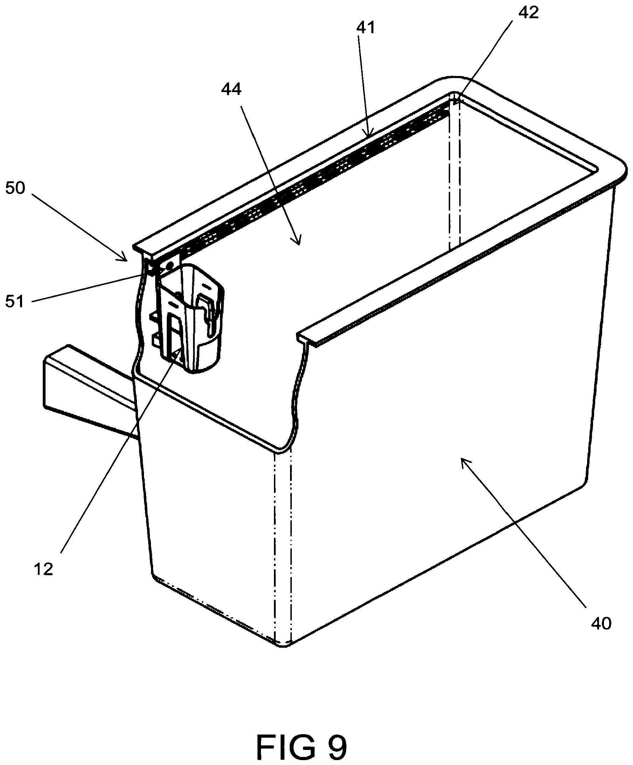

Figure 9 illustrates a cut-away isometric view of an elevated work platform 40 including a connection assembly 50 according to an embodiment of the invention. The elevated work platform 40 is in the form of a bucket.

A rail portion 41 is provided on an inner surface of a wall 44 of the bucket 40. The rail portion 41 includes a channel 42 that extends along substantially the entire length of the rail portion 41.

The connection assembly 50 is connected to the rail portion 41 by inserting a key member (obscured) into the channel 42. The key member may slide into an end of the channel 42, or an insertion point may be provided between opposing ends of the channel 42 into which the key member may be inserted to connect the connection assembly 50 to the rail portion 41.

Unlike the embodiment of the invention shown in Figure 8, the embodiment of Figure 9 includes a pair of connection members (obscured). A first connection member includes the key member (obscured) and is adapted for connection to a bracket member 51. A second connection member is adapted for connection to both the bracket member 51 and the retention member 12.

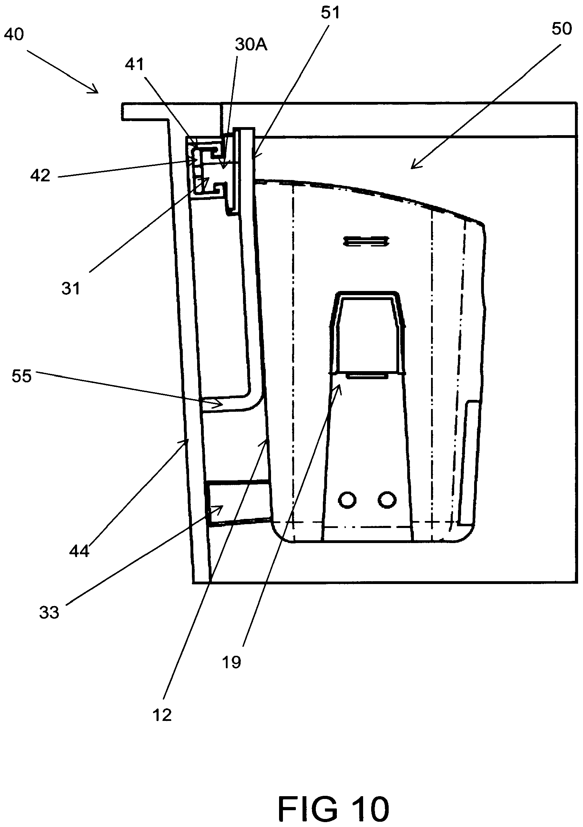

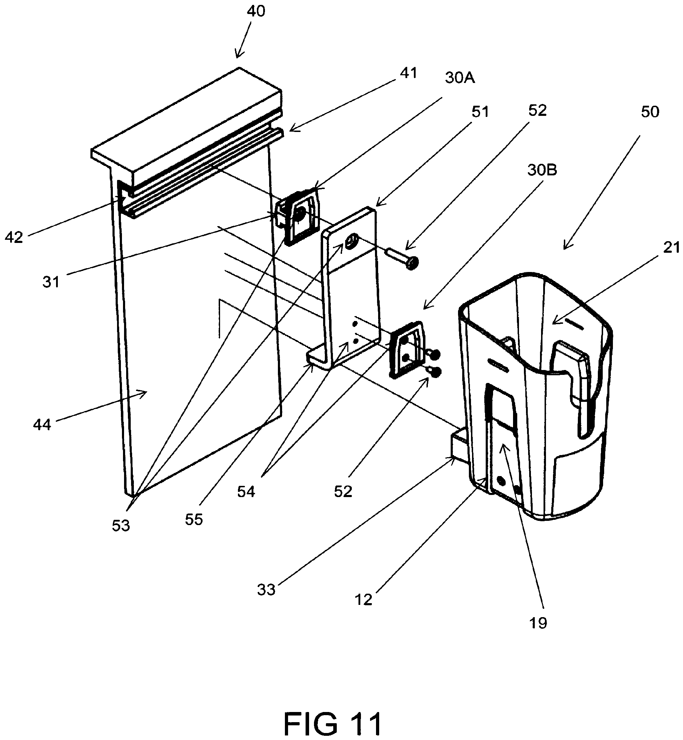

Figures 10 and 11 illustrate side and exploded views, respectively, of the connection assembly 50 of Figure 9. The connection assembly 50 comprises a first connection member 30A adapted for connection to a bracket member 51. The first connection member 30A includes a connection portion comprising a key member 31 that, in use, is received and retained in the channel 42 of a rail portion 41. The key member 31 is adapted for sliding movement within the channel 42, such that the position of the assembly 50 relative to the rail portion 41 may be changed as required.

The rail portion 41 is attached to, or formed integrally with, an inner surface 44 of an elevated work platform in the form of a bucket 40.

The first connection member 30A is connected to the bracket member 51 via a mechanical fastener 52 that passes through complementary bores 53 in both the bracket member 51 and the first connection member 30A. A second connection member 30B is also connected to the bracket member 51. The second connection member 30B is connected to the bracket member by mechanical fasteners 52 that pass through complementary bores 54 in both the bracket member 51 and the second connection member 30B. In this way, both of the connection members 30A, 30B are connected to the bracket member 51.

The second connection member 30B is connected to the retention member by being received and retained in a receiving portion 19 located on the retention member 12. The retention member 12 is lowered onto the second connection member 30B so that the connection member 30A is received in the receiving portion 19. In the embodiment of the invention shown in Figures 10 and 11, a vertical movement of the retention member 12 relative to the second connection member 30B is required to disengage the retention member 12 from the second connection member 30B. Thus, the likelihood of unwanted or unintentional disengagement of the retention member 12 from the connection member 30B is reduced or eliminated.

A spacer member 33 is also provided in the connection assembly 50. The spacer member 33 in the form of a block connected to a lower region of the retention member 12. The spacer member 33 is positioned so as to abut the wall 44 of the bucket below the rail portion 41, thereby spacing the retention member 12 away from the wall 44. Not only does this prevent possible damage to the retention member 12 from hitting the wall 44 or sliding relative to the rail portion 41 while in contact with the wall 44, but it also ensures that the retention member 12 (and therefore the object retention portion 21) is maintained in a more upright position. This assists in preventing objects within the object retention portion 21 from accidentally falling out during use.

In use, the bracket member 51 abuts the retention portion 12. However, in the embodiment of the invention shown in Figures 10 and 11, the bracket member 51 also abuts the inner surface of the wall 44 of the bucket 40. This is achieved by providing the bracket member 51 with a lip portion 55 that extends between the bracket member 51 and the wall 44 of the bucket 40.

By placing the bracket member 51 in abutment with the wall 44 of the bucket 40, the stability of the assembly 50 may be improved. This may be achieved by preventing pivoting movement of the retention member 12 relative to the rail portion 41 and/or to maintain the retention member 12 (and therefore the object retention portion 21) in a substantially upright position.

In the present specification and claims (if any), the word 'comprising' and its derivatives including 'comprises' and 'comprise' include each of the stated integers but does not exclude the inclusion of one or more further integers.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims (if any) appropriately interpreted by those skilled in the art.

## Claims

1. A connection assembly for use in an elevated work platform, the connection assembly comprising a connection member, the connection member including a connection portion adapted for connection to one or more attachment portions located on a surface of the elevated work platform, and a retention portion, the retention portion being adapted for removable connection to a retention member, the retention member further comprising an object retention portion adapted to retain one or more objects.

2. A connection assembly according to claim 1, wherein the one or more attachment portions comprise rail portions, the rail portions being adapted to receive and retain at least a portion of the connection portion therein, wherein, in particular, the rail portions include one or more slots, channels or grooves adapted to receive and retain at least a portion of the connection portion therein.

3. A connection assembly according to claim 1 or 2, wherein the connection portion is in the form of a key member, wherein, in particular, the key member includes one or more projections extending outwardly from the connection member, the one or more projections adapted to be at least partially received within the rail portions.

4. A connection assembly according to claim 2 or 3, wherein, once connected to the rail portion, the connection member is capable of movement relative to the rail portion.

5. A connection assembly according to any one of claims 2 to 4, wherein at least one of the one or more rail portions
- is located in a handrail of the elevated work platform; and/or
- extends at least partially about the periphery of the elevated work platform; and/or
- is located on an inner surface of the elevated work platform; and/or
- is located on an outer surface of the elevated work platform.

6. A connection assembly according to claim 1, wherein the one or more attachment portions are provided with one or more key members adapted to be received in a receiving portion located on the connection portion.

7. A connection assembly according to any one of the preceding claims, wherein the retention portion and the retention member are adapted for removable connection to one another via one or more receiving portions, wherein, in particular, the one or more receiving portions
- are located on the connection member and/or the retention member; and/or
- comprise one or more slots or channels in which at least a portion of the connection member or retention member is received.

8. A connection assembly according to any one of the preceding claims, wherein the object retention portion comprises a receptacle into which one or more objects are placed, wherein, in particular, the receptacle comprises a bucket, basket, holster, container or storage pouch.

9. A connection assembly according to any one of the preceding claims, wherein the objection retention portion is divided into a plurality of regions into which objects may be placed.

10. A connection assembly according to any one of the preceding claims, wherein the object retention portion includes
- drainage apertures provided in a lower portion thereof; and/or
- a base portion adapted for removable connection thereto; and/or
- one or more light sources adapted to illuminate the interior of the object retention portion; and/or
- a trigger guard adapted to prevent the unwanted or accidental actuation of a power tool located in the object retention portion.

11. A connection assembly according to any one of the preceding claims, wherein the connection assembly further comprises one or more spacer members adapted to reduce or eliminate lateral or pivoting movement of the retention portion relative to the support, wherein, in particular, the one or more spacer members are adapted for removable connection to a lower region of the retention member.

12. A connection assembly according to any one of the preceding claims, wherein the connection assembly is connected to the one or more attachment portions via one or more intermediate support members.

13. A connection assembly according to any one of the preceding claims, wherein the connection assembly is at least partially fabricated from a fibre reinforced polymer.

14. A connection assembly according to any one of the preceding claims, wherein the elevated work platform comprises a bucket.

15. An elevated work platform including one or more attachment portions defining at least a portion of the periphery of the elevated work platform, wherein the one or more attachment portions are adapted to at least partially receive the connection portion of the connection member of the connection assembly according to any one of claims 1 to 14 therein.
